# EUROPEAN PATENT APPLICATION

(11) **EP 4 155 260 A1**
(43) Date of publication of application: **29.03.2023**
(21) Application number: 21199490.0
(22) Date of filing: 28.09.2021
(51) Int. Cl.: C01B 3/50, C10J 3/00, B01D 1/28

(54) **A HYDROGEN GENERATION SYSTEM AND A METHOD FOR GENERATING HYDROGEN**

(71) Applicant: Aquafair AB, 702 18 Örebro (SE)
(72) Inventor: CARLMAN, Fredrik, Örebro (SE); ÅHRSTRÖM, Bert-Olof, Örnsköldsvik (SE)
(74) Representative: Bjerkén Hynell KB

(57) **Abstract**

A hydrogen generation system (1) comprising a gas source (3) for a gas intended to be use for generation of hydrogen and a separation reactor (5) configured to receive the gas and arranged to separate hydrogen from the gas is disclosed. The hydrogen generation system (1) comprises a mechanical vapor compression (MVC/MVR) subsystem (7) arranged to receive a liquid and arranged to produce compressed vapor from the liquid and to heat the liquid being received, wherein the MVC/MVR-subsystem (7) is connected to the separation reactor (5) to provide a portion of the compressed vapor produced in the MVC/MVR-subsystem (7) to the separation reactor (5) to separate hydrogen from the gas. A method for generating hydrogen is also disclosed.

## Description

### Technical field

The present disclosure relates to a hydrogen generation system and to a method for generating hydrogen.

### Background

Hydrogen is a zero carbon fuel that is burned with oxygen. Hydrogen can be used in fuel cells or internal combustion engines and has been used in commercial vehicles, such as passenger cars or buses for several years. Hydrogen as fuel has positive effects to the air conditions, which is of particular importance for air conditions in big cities.

Because pure hydrogen does not occur naturally on earth in large quantities, it needs to be produced in an industrial way. The most common method for producing hydrogen is steam methane reforming of fossil gas. Other alternative methods are: biomass gasification, electrolysis of water or solar thermochemistry.

In CN112143525A a process for producing hydrogen from waste is described. According to the document a gasification step is used for creating syngas from which hydrogen is generated.

Systems for generation of hydrogen are also described in the following documents. CN109852429A, JP2000140800A and US20090049748A1.

One drawback with the known systems is the complexity of the systems.

Thus, one object of the present disclosure is to achieve an improved hydrogen generation system having conditions for production of hydrogen in an efficient way regarding the use of energy. Further object of the present disclosure is to achieve a less complex hydrogen generation system comparing to the systems known in the art. Further, an object of the present disclosure is to achieve an improved method for generating hydrogen.

### Summary

The above-mentioned objects are achieved by the present disclosure according to the independent claims.

Preferred embodiments are set forth in the dependent claims.

According to one aspect, the present disclosure relates to a hydrogen generation system comprising:
- a gas source for a gas intended to be use for generation of hydrogen and
- a separation reactor configured to receive the gas and arranged to separate hydrogen from the gas. The hydrogen generation system comprises a mechanical vapor compression (MVC/MVR) subsystem arranged to receive a liquid and arranged to produce compressed vapor from the liquid and to heat the liquid being received. The MVC/MVR-subsystem is connected to the separation reactor to provide a portion of the compressed vapor produced in the MVC/MVR-subsystem to the separation reactor to separate hydrogen from the gas.

Because the hydrogen generation system comprises the MVC/MVR-subsystem connected to the separation reactor, a portion of energy produced by the MVC/MVR-subsystem can be used in the separation reactor to generate hydrogen. Thus, the separation reactor can utilize a portion of energy produced by the MVC/MVR-subsystem by using the portion of the compressed vapor produced in the MVC/MVR-subsystem to generate hydrogen. Consequently an improved hydrogen generation system is achieved having conditions for efficient use of energy within the system, particularly by using a portion of energy created by the MVC/MVR-subsystem to generate hydrogen.

Further, the ingoing components of the hydrogen generation system i.e. the MVC/MVR-subsystem, the gas source and the separation reactor can be arranged as mobile units that are easy to move between different locations. The ingoing components can be arranged as one unit that can be mobile or the ingoing components can be arranged separately mobile and can be moved to a place of intended use and connected together at the intended place of use. The gas source may comprise a gas tank. Thus, the hydrogen generation system can be positioned, for example, at a gas supply pipeline reducing the need of transport of the gas to the hydrogen generation system.

Consequently, an improved hydrogen generation system is provided, which system has conditions for an efficient utilization of energy produced by a MVC/MVR-subsystem to generate hydrogen. Further, the hydrogen generation system according to the present disclosure has conditions for reducing of some transports to the system due to the fact that the ingoing components of the system can be designed to enable mobility of the components and thereby of the entire hydrogen generation system for freely positioning of the system at the desired positions for use of the system to generate hydrogen.

Therefore, the above mentioned object is achieved.

Optionally the gas source is a gasifier configured to receive an input matter suitable for gasification, wherein the gasifier is arranged to gasify the input matter to produce the gas. The gasifier enables gasification the input matter suitable for gasification. Thus, hydrogen can be generated in the hydrogen generation system from a product from gasification of the input matter in the gasifier.

Further, due to the mobility aspects described above, which aspects include the gasifier, the hydrogen generation system can be positioned at a place of collecting the input matter. Thereby some transports of the input matter to the hydrogen generation system can be reduced, such as transports by trucks can be eliminated.

Optionally, the input matter comprises an organic matter, wherein the gasifier is arranged to gasify the organic matter. The gasifier enables gasification the organic matter. Thus, hydrogen can be generated in the hydrogen generation system from a product from gasification of the organic matter gasified in the gasifier. A product from gasification of the organic matter may be syngas.

Further, due to the mobility aspects described above, which aspects include the gasifier, the hydrogen generation system can be positioned at a place of collecting the organic matter, such as for example a silo. Thus, transports of the organic matter to the hydrogen generation system can be reduced, such as transports by trucks can be eliminated.

Optionally, the input matter comprises household waste and the gasifier is configured to gasify the household waste. Thus, hydrogen can be generated in the hydrogen generation system from a product from gasification of the household waste, such as municipal waste, in the gasifier. A product from gasification of the organic matter may be syngas.

Further, due to the mobility aspects described above, the hydrogen generation system can be positioned at a place of collecting the household waste, i.e. at a landfill. Thus, transports of the household waste to the hydrogen generation system can be reduced, such as transports by trucks can be eliminated.

Optionally, the hydrogen generation system comprises a hydrogen cleaning reactor connected to the separation reactor. Thus, hydrogen generated in the hydrogen generation system can be cleaned to achieve pure hydrogen before further use.

Optionally, the hydrogen generation system comprises a hydrogen tank arranged to collect hydrogen separated in the separation reactor. Thus, hydrogen can be collected in the tank for further use of hydrogen. As an alternative, the tank can be arranged to be transported to a desired location for use of hydrogen generated in the hydrogen generation system.

Optionally, the MVC/MVR-subsystem is arranged as a closed loop vapor MVC/MVR-subsystem. Thus, vapor can be used in an efficient manner.

Optionally, the MVC/MVR-subsystem is a MVC/MVR liquid purification subsystem. Thus, an improved hydrogen generation system is provided having conditions for producing pure liquid by means of the MVC/MVR-subsystem and for generating hydrogen by means of the portion of compressed vapor provided to the separation reactor.

Optionally, the MVC/MVR liquid purification subsystem is a MVC/MVR water desalination subsystem.

Optionally, the liquid is water and the heated liquid is heated cleaned water. Thus, an yet improved hydrogen generation system is provided having conditions for producing pure fresh water by means of the MVC/MVR-subsystem and for generating hydrogen by means of the portion of compressed vapor provided to the separation reactor.

According to a further aspect the present disclosure relates to a method for generating hydrogen using a hydrogen generation system comprising:
- a gas source for a gas intended to be use for generation of hydrogen and
- a separation reactor configured to receive the gas and arranged to separate hydrogen from the gas,
the method comprises:
- connecting a mechanical vapor compression (MVC/MVR) subsystem, arranged to receive a liquid and arranged to produce compressed vapor from the liquid and to heat the liquid being received, to the separation reactor and
- providing the separation reactor with a portion of the compressed vapor produced in the MVC/MVR-subsystem to separate hydrogen from the gas.

Because the hydrogen generation system comprises the MVC/MVR-subsystem and the method comprises the steps of connecting the MVC/MVR-subsystem to the separation reactor and of providing the separation reactor with a portion of compressed vapor, a portion of energy produced by the MVC/MVR-subsystem can be used in the separation reactor to generate hydrogen. Thus, the separation reactor can utilize a portion of energy produced by the MVC/MVR-subsystem by using the portion of the compressed vapor produced in the MVC/MVR-subsystem to generate hydrogen.

Consequently, an improved method for generating hydrogen is provided where a portion of energy generated by the MVC/MVR-subsystem can be used in an efficient manner to generate hydrogen. Therefore, the above mentioned object is achieved.

Optionally, the gas source is a gasifier configured to receive an input matter suitable for gasification and to gasify the input matter, wherein the method comprises: providing the input matter to the gasifier and to gasify the input matter in the gasifier to produce the gas.

The gasifier enables gasification the input matter suitable for gasification. Thus, hydrogen can be generated in the hydrogen generation system from a product from gasification of the input matter in the gasifier.

Optionally, the input matter comprises an organic matter, wherein the gasifier is configured to gasify the organic matter to produce the gas. The gasifier enables gasification the organic matter. Thus, hydrogen can be generated in the hydrogen generation system from a product from gasification of the organic matter gasified in the gasifier. The product from gasification may be syngas.

Optionally, the input matter comprises household waste and the gasifier is configured to gasify the household waste to produce the gas. Thus, hydrogen can be generated in the hydrogen generation system from a product from gasification of the household waste, such as municipal waste, in the gasifier. The product from gasification may be syngas.

Optionally, the method comprises collecting hydrogen separated in the separation reactor in a hydrogen tank. Thus, hydrogen can be collected in the tank for further use of hydrogen. As an alternative, the tank can be arranged to be transported to a desired location for use of hydrogen generated by using the method.

### Brief description of the drawings

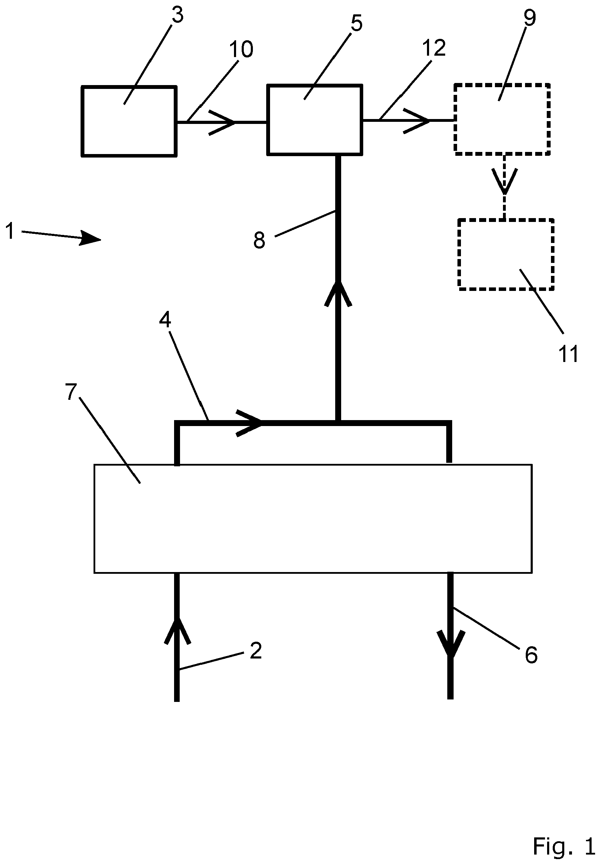

Fig. 1 shows a schematic illustration of a hydrogen generation system according to some embodiments.

### Detailed description

The hydrogen generation system with MVC/MVR-subsystem will now be described in detail with references to the appended figures. Throughout the figures the same, or similar, items have the same reference signs. Moreover, the ,items and the figures are not necessarily to scale, emphasis instead being placed upon illustrating the principles of the invention.

Mechanical Vapor Compression MVC or also called Mechanical Vapor Recompression MVR is an evaporation method by which a blower, compressor or jet ejector is used to compress, and as a result of the compression, increase the pressure, density and temperature of the vapor produced. As a result, the vapor can serve as the heating medium for its "mother" liquid or solution being concentrated. Without the compression, the vapor would be at the same temperature as its "mother" liquid/solution, and no heat transfer could take place.

With reference to **Fig. 1**, a hydrogen generation system 1 comprising: a gas source 3 a separation reactor 5 and a mechanical vapor compression MVC/MVR subsystem 7 is illustrated according to some embodiments.

Preferably, the MVC/MVR-subsystem 7 is arranged as a closed loop vapor MVC/MVR-subsystem. The MVC/MVR-subsystem 7 may be a MVC/MVR liquid purification subsystem, preferably, the MVC/MVR liquid purification subsystem is a MVC/MVR water desalination subsystem.

The liquid may be water or the liquid may be any other liquid or mixture of liquids and/or other materials e.g. solids, polymers, fatty alcohols, oils, additives, soluble or insoluble particles and molecular systems including ionic fluids. The heated liquid may then be a heated cleaned water. Thus, the MVC/MVR-subsystem 7 may be a MVC/MVR liquid purification subsystem, particularly a MVC/MVR water desalination subsystem.

The liquid is supplied to the MVC/MVR-subsystem 7 through a liquid supply line 2. The compressed vapor are transported through a compressed vapor line 4. The heated liquid is transported through a heated liquid line 6.

The hydrogen generation system 1 comprises a gas source 3 for a gas intended to be use for generation of hydrogen. The gas source 3 may be a gasifier configured to receive an input matter suitable for gasification. The input matter may comprise an organic matter or household waste or other suitable matter that can be gasified in the gasifier to produce a gas for further use in the separation reactor to generate hydrogen. According to some embodiments, the gas source 3 may be a gas tank filled with gas to be used for generating hydrogen. The gas in the gas tank may be natural gas.

When using a gasifier is the hydrogen generation system 1, the gasifier is arranged to gasify the input matter suitable for gasification. The gasifier is a common knowledge in the art and is therefore not described in details herein.

A gas from the gas source 3, which gas may be contained in the gas source 3 or may be generated in the gas source 3, such as, for example syngas, is transported to the separation reactor 5 configured to receive the gas and arranged to separate hydrogen from the gas. The gas from the gas source 3 is transported to the separation reactor 5 though a gas line 10.

The separation reactor 5 is arranged to operate according to a steam reforming principle. Thus, in the hydrogen generation system 1 according to the present disclosure, a portion of the compressed vapor produced in the MVC/MVR-subsystem 7 is sent to the separation reactor 5 to enable a stem reforming reaction in the separation reactor 5. to separate hydrogen from the gas from the gas source 3. The portion of the compressed vapor is transported through a compressed vapor line 8. Consequently, an improved hydrogen generation system 1 is provided, which system 1 has conditions for an efficient utilization of energy produced by a MVC/MVR-subsystem 7 to generate hydrogen.

The hydrogen generation system 1 may comprise a hydrogen cleaning reactor 9 (marked dashed) connected to the separation reactor 5. Hydrogen generated in the separation reactor 5 can be transported to the cleaning reactor 9 through a hydrogen line 12.

Further, the hydrogen generation system 1 may also comprise a hydrogen tank 11 (marked dashed) arranged to collect hydrogen separated in the separation reactor 5. Thus, hydrogen can be collected in the tank 11 for further use of hydrogen. As an alternative, the tank 11 can be arranged to be transported to a desired location for use of hydrogen generated in the hydrogen generation system.

One advantage with the hydrogen generation system 1 according to the present disclosure is that the system 1 has conditions to reduce some transports to the system 1 due to the fact that the ingoing components of the system 1 can be designed to enable mobility of the ingoing components of the system 1 and thereby mobility of the entire hydrogen generation system 1 for freely positioning of the system 1 at the desired positions for the use of the system 1 for generation of hydrogen.

Through the application the arrows illustrate the flow direction in the respective line.

## Claims

1. A hydrogen generation system (1) comprising:
- a gas source (3) for a gas intended to be use for generation of hydrogen and
- a separation reactor (5) configured to receive said gas and arranged to separate hydrogen from said gas,
**characterized in that**
the hydrogen generation system (1) comprises a mechanical vapor compression (MVC/MVR) subsystem (7) arranged to receive a liquid and arranged to produce compressed vapor from said liquid and to heat the liquid being received, wherein the MVC/MVR-subsystem (7) is connected to the separation reactor (5) to provide a portion of the compressed vapor produced in the MVC/MVR-subsystem (7) to the separation reactor (5) to separate hydrogen from the gas.

2. The hydrogen generation system (1) according to claim 1, wherein the gas source (3) is a gasifier configured to receive an input matter suitable for gasification, wherein the gasifier is arranged to gasify the input matter to produce said gas.

3. The hydrogen generation system (1) according to claim 2, wherein the input matter comprises an organic matter, wherein the gasifier is arranged to gasify the organic matter.

4. The hydrogen generation system (1) according to claim 2 or 3, wherein the input matter comprises household waste, wherein the gasifier is configured to gasify the household waste.

5. The hydrogen generation system (1) according to any of claims 1 to 4, comprising a hydrogen cleaning reactor (9) connected to said separation reactor (5).

6. The hydrogen generation system (1) according to any of claims 1 to 5, comprising a hydrogen tank (11) arranged to collect hydrogen separated in the separation reactor (5).

7. The hydrogen generation system (1) according to any of claims 1 to 6, wherein the MVC/MVR-subsystem (7) is arranged as a closed loop vapor MVC/MVR-subsystem.

8. The hydrogen generation system (1) according to any of claim 1 or 7, wherein the MVC/MVR-subsystem (7) is a MVC/MVR liquid purification subsystem.

9. The hydrogen generation system (1) according to claim 8, wherein the MVC/MVR liquid purification subsystem is a MVC/MVR water desalination subsystem.

10. The hydrogen generation system (1) according to any of claims 1 to 9, wherein the liquid is water and the heated liquid is heated cleaned water.

11. A method for generating hydrogen using a hydrogen generation system (1) comprising:
- a gas source (3) for a gas intended to be use for generation of hydrogen and
- a separation reactor (5) configured to receive said gas and arranged to separate hydrogen from said gas,
**characterized in that** the method comprises:
- connecting a mechanical vapor compression (MVC/MVR) subsystem (7), arranged to receive a liquid and arranged to produce compressed vapor from said liquid and to heat the liquid being received, to the separation reactor (5) and
- providing the separation reactor (5) with a portion of the compressed vapor produced in the MVC/MVR-subsystem (7) to separate hydrogen from said gas.

12. The method according to claim 11, wherein the gas source (3) is a gasifier configured to receive an input matter and to gasify the input matter, wherein the method comprises: providing the input matter to the gasifier and to gasify the input matter in the gasifier to produce said gas.

13. The method according to claim 12, wherein the input matter comprises an organic matter, wherein the gasifier is configured to gasify the organic matter to produce said gas.

14. The method according to claim 12 or 13, wherein the input matter comprises household waste and the gasifier is configured to gasify the household waste to produce said gas.

15. The method according to any of claims 11 to 14, comprising collecting hydrogen separated in the separation reactor (3) in a hydrogen tank (11).
